# EUROPEAN PATENT SPECIFICATION

(11) **EP 2 210 699 B1**
(45) Date of publication and mention of the grant of the patent: **30.11.2011**
(21) Application number: 10151347.1
(22) Date of filing: 21.01.2010
(51) Int. Cl.: B23Q 1/00, B23Q 1/76

(54) **Steady rest**
Lünette
Lunette

(30) Priority: 23.01.2009 IT MO20090015
(43) Date of publication of application: 28.07.2010
(73) Proprietor: M.T. S.R.L., 47842 San Giovanni in Marignano (RN) (IT)
(72) Inventor: Marchetti, Terenzio, 47842 San Giovanni in Marignano (RN) (IT)
(74) Representative: Crugnola, Pietro

(56) References cited:
- DE-A1- 3 625 218
- FR-A1- 2 118 995

## Description

The invention relates to a steady rest which is mountable on a tool-holder turret of a numerical control lathe for supporting a workpiece during a machining.

Steady rests are devices used in turning machinings for supporting long workpieces to oppose the tendency of the long workpieces to flex during machining and to increase machining quality.

Steady rests are known comprising a body that is fixable to on a tool-holder turret of a numerical control lathe.

Such steady rests comprise jaws, projecting from the aforesaid body, arranged for abutting, in a machining step, an external surface of a workpiece.

Known steady rests further comprise a piston connected mechanically to the jaws to move the latter between a closed position in which the jaws abut on and clamp the workpiece, and an open position in which the jaws release the workpiece. The piston is driven by pressurised oil.

The pressurised oil is supplied to the steady rest via an oil-pressure system included in the lathe.

The oil-pressure system provided in the lathe comprises a pair of conduits connectable to the tool-holder turret to send/receive the oil to/from the tool-holder turret, a tank for containing the oil, a pump for pumping the oil and a plurality of valves for regulating the flow of oil to/from the tool-holder turret.

The tool-holder turret is on the other hand provided with a further pair of conduits that are connectable to the conduits of the aforesaid oil-pressure system and with a rotating distributor for conveying the oil to the steady rest whatever the position of the steady rest on the tool-holder turret.

A drawback of known steady rests is that for operating they require appropriately prearranged tool-holder turrets or tool-holder turrets that are provided with the aforesaid rotating distributor and with the further conduits connected to the oil-pressure system.

Such turrets, in addition to being expensive, complex to make and requiring frequent maintenance, greatly reduce the performances and the versatility of the lathe in which they are used.

In fact, the rotating distributor included in such turrets prevents the simultaneous presence in the turret of the motor required to rotate the drivable tools, which means that such tool-holder turrets are suitable for supporting only static tools.

DE3625218A1 discloses a workpiece-holding or gripping device. Such a workpiece-holding or gripping device is mounted on a turret head and is actuable hydraulically via a feed line.

An object of the invention is to improve steady rests that are mountable on a tool-holder turret of a numerical control lathe for supporting a workpiece during a machining.

A further object is to provide steady rests that enable the performances and the versatility of the lathes in which they are used to be increased compared with known steady rests. The invention provides a steady rest as disclosed in independent claim 1.

Owing to the invention it is possible to provide a steady rest that enables the performances and the versatility of the lathes in which it is used to be increased compared with known steady rests.

In fact, the driving means enables the steady rest to be driven by drive of the tool-holder turret.

In other words, the steady rest according to the invention does not require a tool-holder turret prearranged for receiving the steady rest but can be mounted on any driven tool-holder turret.

The invention can be better understood and implemented with reference to the attached drawings that illustrate an embodiment thereof by way of non limiting example, in which:
Figure 1 is a top view of a steady rest according to the invention;

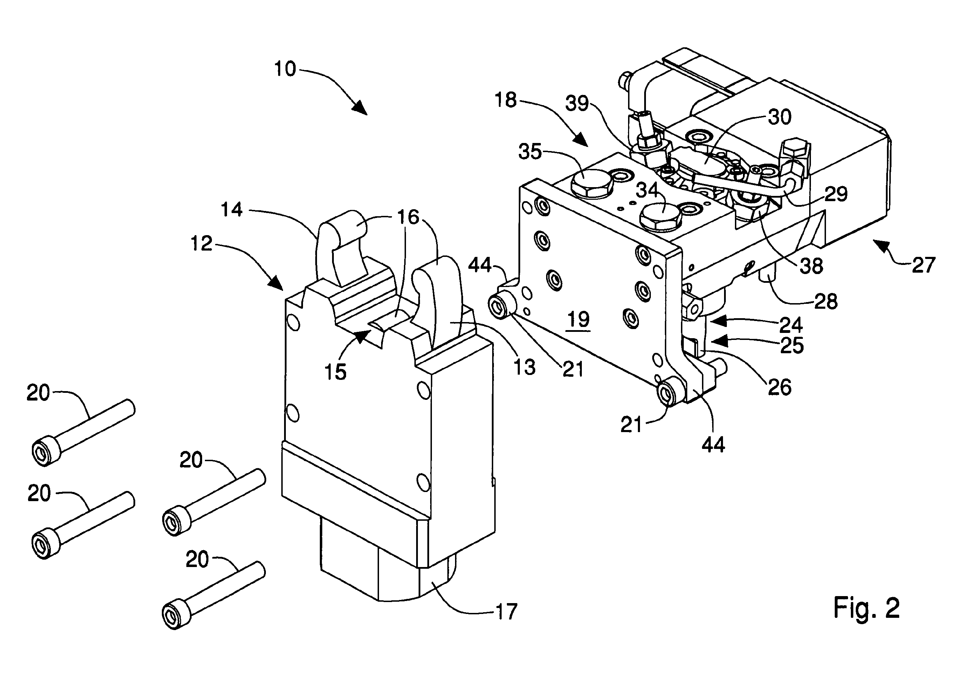

Figure 2 is a partially exploded perspective view of the steady rest in Figure 1;

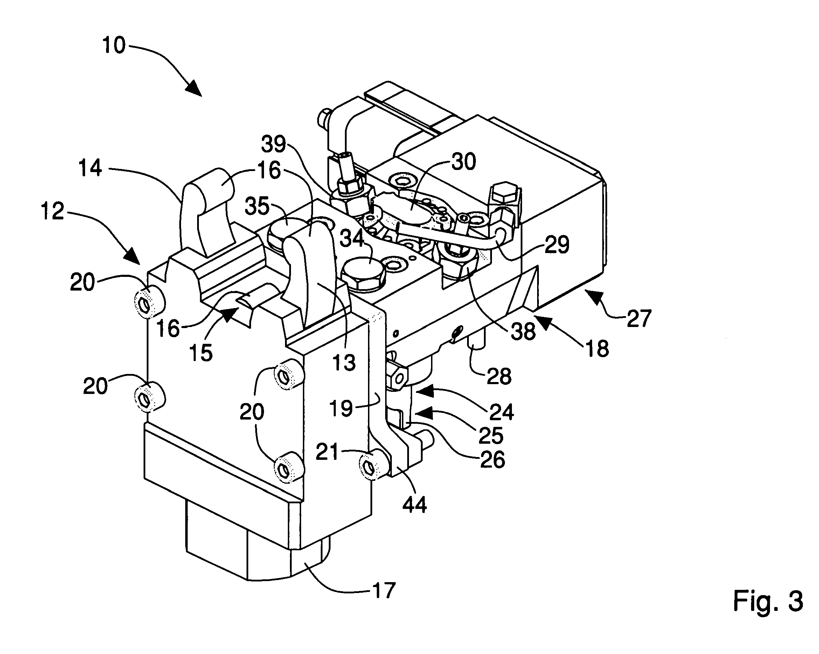

Figure 3 is a perspective view of the steady rest in Figure 1;

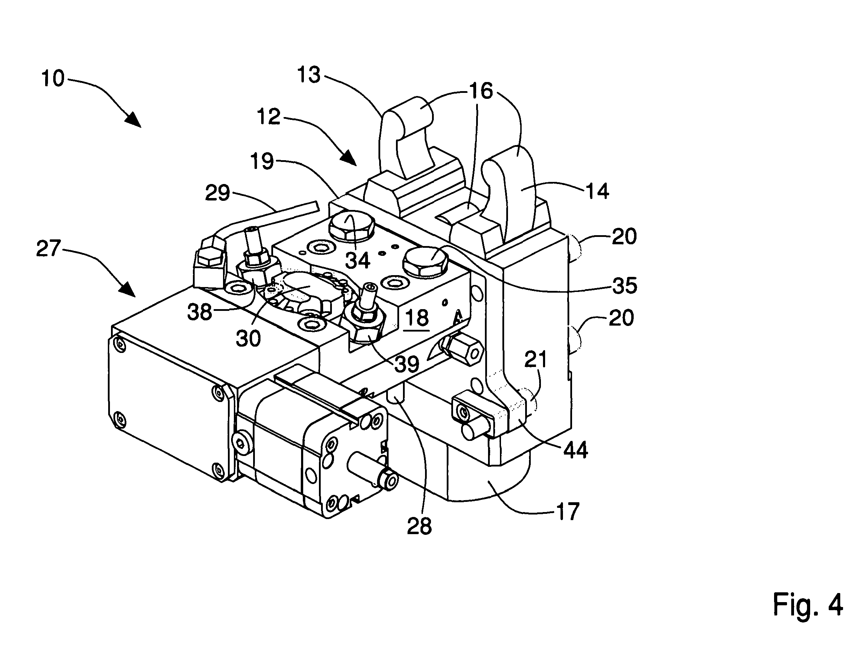

Figure 4 is a further perspective view of the steady rest in Figure 1;
Figure 5 is a perspective view of a tool-holder turret arranged for supporting the steady rest in Figure 1;
Figure 6 is a perspective view of the steady rest in Figure 1 mounted on the tool-holder turret of Figure 5;
Figure 7 is a hydraulic scheme of the steady rest in Figure 1.

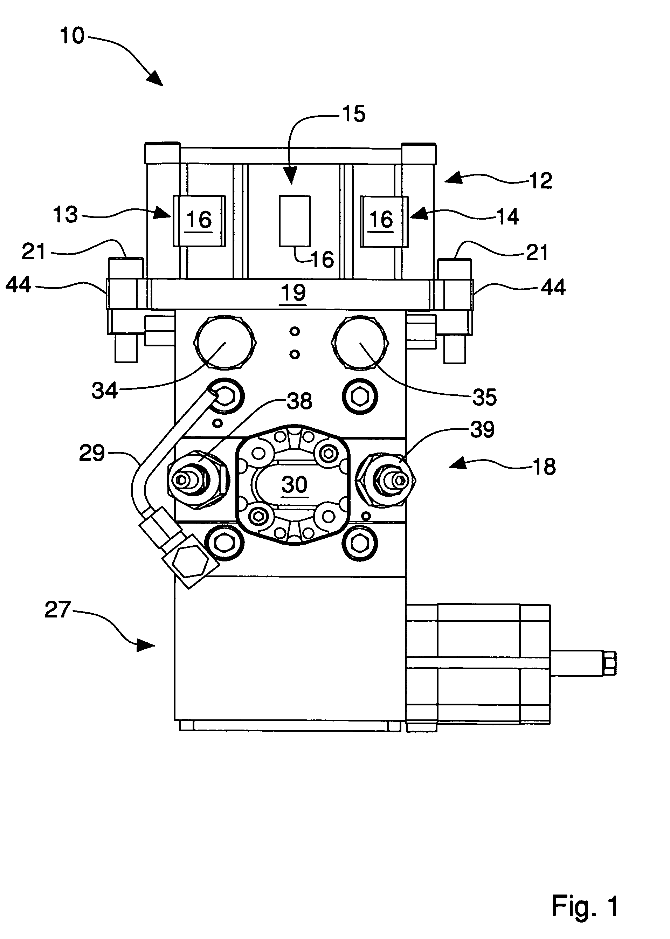

With reference to Figure 1 there is shown a steady rest 10 for supporting a workpiece during a machining.

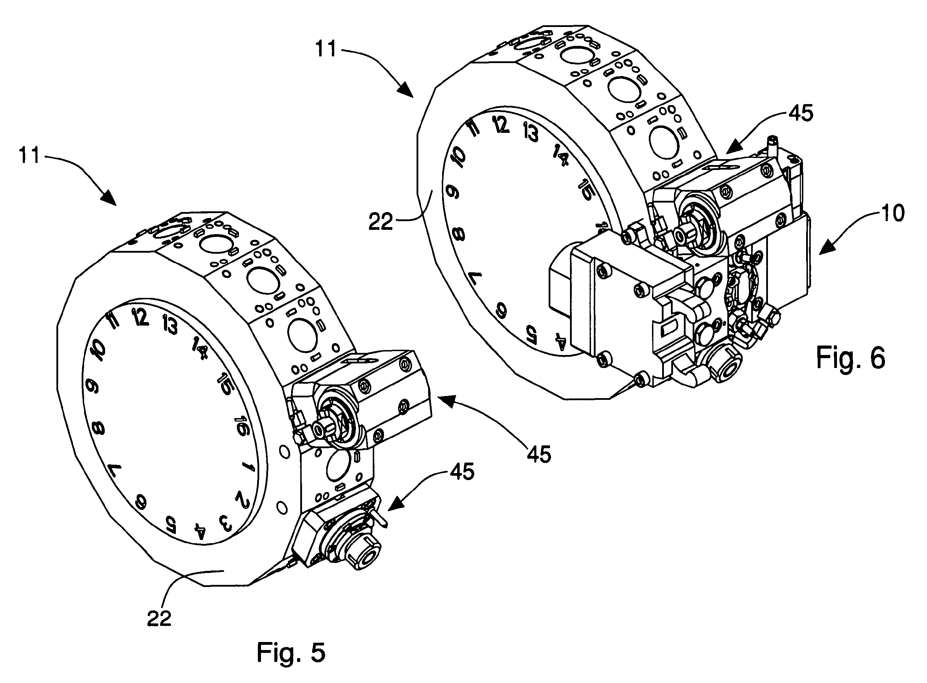

In particular, the steady rest 10 is mountable on a tool-holder turret 11 (Figures 5 and 6) of a numerical control lathe, which is not shown, the tool-holder turret 11 being arranged for supporting driven or static tool-holder modules 45.

The steady rest 10 comprises a body 12 from which protrude a first abutting element 13, a second abutting element 14 and a third abutting element 15 arranged for abutting, in use, an external surface of the workpiece.

The first abutting element 13, the second abutting element 14 and the third abutting element 15 are self-centring and act as grasping pliers for grasping the workpiece to be machined. In particular, the first abutting element 13, the second abutting element 14 and the third abutting element 15 each comprise, substantially at the respective ends thereof, a roller 16 or bearing, for rotationally supporting the workpiece to be machined during machining.

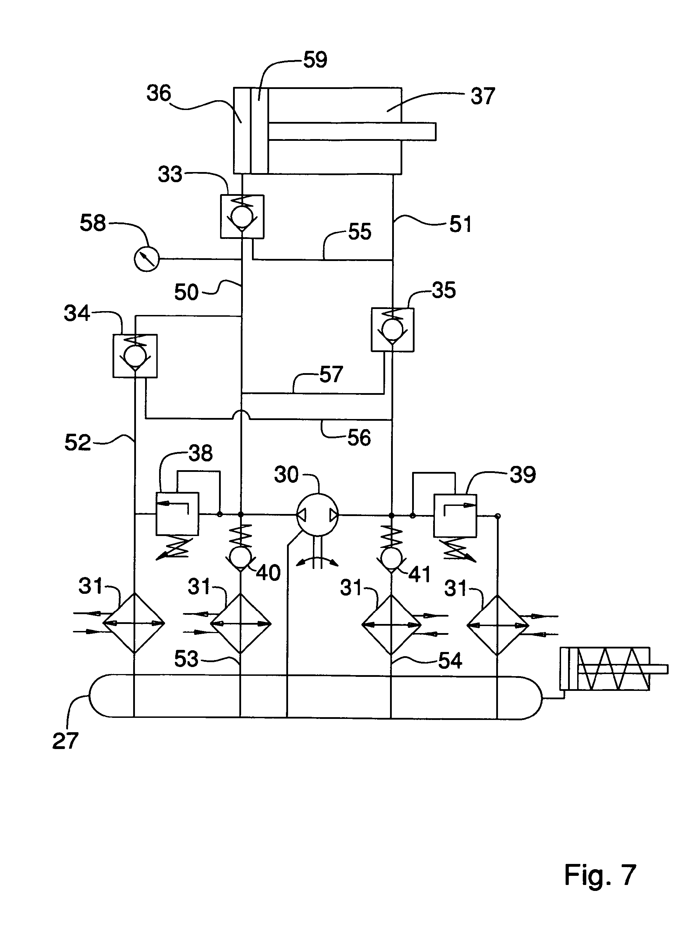

The steady rest 12 further comprises a piston 59, which is illustrated schematically in Figure 7, which is slidable in a cylinder 17 fixed to the body 12.

The piston 59 is drivable, as will be better explained below, by pressurised oil and is arranged for moving the first abutting element 13, the second abutting element 14 and the third abutting element 15 between a closed position in which the first abutting element 13, the second abutting element 14 and the third abutting element 15 clamp the workpiece to be machined and an open position in which the first abutting element 13, the second abutting element 14 and the third abutting element 15 release the already machined workpiece and enable a user to position a new workpiece to be machined. The steady rest 10 further comprises a supporting body 18 that is arranged for supporting the body 12 and is fixable by screws 28 to the tool-holder turret 11.

The supporting body 18 comprises a supporting plate 19 to which the body 12 is fixable by further screws 20.

The supporting plate 19 is further provided with a pair of side protuberances 44 that are provided with holes in which other screws 21 are engageable for fixing the supporting plate 19 to a wall 22 (Figures 5 and 6) of the tool-holder turret 11 so as to increase the stiffness of the steady rest 10 during machining.

In this manner the steady rest 10 is fixed to the tool-holder turret 11 both by the screws 28 and by the other screws 21.

The supporting body 18 rotatably supports a driving shaft 24. The driving shaft 24 comprises an end portion 25 provided with a male attachment 26 arranged for engaging with a corresponding female attachment, or drive, which is not shown, of a rotating driving shaft of the tool-holder turret 11.

In use, when the female attachment engages with the male attachment 26, the driving shaft 24 is rotated by the rotating driving shaft.

The steady rest 10 further comprises a hydraulic and reversible pump 30, received inside the supporting body 18. The pump 30 is connected to and rotated by the driving shaft 24.

In particular, the pump 30 comprises a further driving shaft, which is not shown, provided with a further male attachment arranged for engaging with a respective further female attachment obtained on a further end portion of the driving shaft 24, the further end portion being opposite the end portion 25.

The pump 30 is connected to a first chamber 36 and to a second chamber 37 of the cylinder 17 respectively by a first conduit 50, or first branch, of delivery/discharge, and a second conduit 51, or second branch, of delivery/discharge (Figure 7).

The steady rest 10 further comprises a tank 27, for example a storage tank, for containing the oil.

In particular, the tank 27 is fixed to the supporting body 18 on the opposite side of the supporting plate 19.

The steady rest 10 further comprises a heat exchanger 31, schematically shown in Figure 7, interposed between the tank 27 and the supporting body 18.

The heat exchanger 31 comprises a gap that is not shown inside which a cooling fluid can flow, in particular water, dispensed by the tool-holder turret 11 to the steady rest 10 by a suitable attachment.

In this manner, in use, the heat exchanger 31 cools both the oil present in the tank 27 and the supporting body 18.

The aforesaid gap is connected to a conduit 29 supported by and projecting from the supporting body 18.

The conduit 29 is arranged in use for conveying the cooling fluid to the first abutting element 13, the second abutting element 14 and the third abutting element 15 to cool the rollers 16.

The steady rest 10 further comprises a third conduit 52, schematically shown in Figure 7, arranged for conveying the oil between the first conduit 50 and the tank 27.

Also, the steady rest 10 comprises a fourth conduit 53 and a fifth conduit 54, schematically shown in Figure 7, for conveying the oil between the tank 27 and respectively the first conduit 50 and the second conduit 51.

The steady rest 10 further comprises a first valve 33, or safety valve, piloted and one-way, schematically shown in Figure 7, arranged for controlling and adjusting an oil flow between the pump 30 and the first chamber 36.

The first valve 33 is received in the body 12 and is arranged for preventing the first abutting element 13, the second abutting element 14 and the third abutting element from releasing the workpiece, for example after oil leakage.

In particular, the first valve 33 is inserted into the first conduit 50 and is pilotable by a first signal 55 taken from the second conduit 51 to enable the oil to flow from the first chamber 36 to the tank 27 and the pump 30 when the oil pressure in the second conduit 51 is greater than the oil pressure in the first conduit 50.

The steady rest 10 further comprises a second valve 34 supported by the supporting body 18.

The second valve 34, piloted and one-way, is arranged for controlling and adjusting an oil flow from the first conduit 50 to the tank 27.

In particular, the second valve 34 is inserted in the third conduit 52 is pilotable by a second signal 56 taken from the second conduit 51 to enable the oil to flow from the first chamber 36 to the tank 27 when the oil pressure in the second conduit 51 is greater than the oil pressure in the first conduit 50.

The steady rest 10 further comprises a third valve 35 supported by the supporting body 18.

The third valve 35, piloted and one-way, is arranged for controlling and adjusting an oil flow between the pump 30 and the second chamber 37.

In particular, the third valve 35 is inserted into the second conduit 51 and is pilotable by a third signal 57 taken from the first conduit 50 to enable the oil to flow from the second chamber 37 to the pump 30 when the oil pressure in the first conduit 50 is greater than the oil pressure in the second conduit 51.

The steady rest 10 further comprises a fourth valve 38 and a fifth valve 39 supported by the supporting body 18.

The fourth valve 38 and the fifth valve 39, or maximum pressure valves, are arranged for connecting respectively the first conduit 50 and the second conduit 51 to the tank 27.

In particular, the fourth valve 38 and the fifth valve 39 are arranged for opening when the oil pressure reaches respectively a first and a second preset threshold value, such threshold values being adjustable.

The steady rest 10 further comprises a sixth valve 40 and a seventh valve 41, schematically shown in Figure 7.

The sixth valve 40 and the seventh valve 41 are one-way valves and are supported by the supporting body 18.

The sixth valve 40 and the seventh valve 41 are inserted respectively in the fourth conduit 53 and in the fifth conduit 54.

The sixth valve 40 and the seventh valve 41 respectively connect the first conduit 50 and the second conduit 51 to the tank 27 and enable the oil to flow from the tank 27 respectively towards the first conduit 50 and the second conduit 51.

The steady rest 10 may further comprise an attachment, which is not shown, projecting from the body 12 to connect with a source of compressed air.

The compressed air can thus be introduced into the body 12 and exit therefrom so as to prevent foreign bodies such as machining chips and cooling fluid from penetrating inside the body 12.

The steady rest 10 is further provided with filters, not shown, which are positioned in the supporting body 18 and are arranged for cleaning the oil of the impurities that are generated during operation.

Also, the steady rest 10 comprises a pressure gauge 58, schematically shown in Figure 7, for controlling the oil pressure in the first conduit 50.

Further, the steady rest 10 comprises detecting means, which is not shown, for detecting whether the first abutting element 13, the second abutting element 14 and the third abutting element 15 are in the closed position or in the open position.

Such detecting means can include, for example, one or more sensors that are able to measure the oil pressure to establish whether the first abutting element 13, the second abutting element 14 and the third abutting element 15 are in the closed or open position.

The detecting means can be further associated with a wireless data transmission system, which is not shown, to connect to a numerical control unit of the lathe.

This transmission system may comprise a transmitter, for example supported by the supporting body 18, and a receiver, for example positioned on the tool-holder turret 11.

The transmitter and the receiver can respectively transmit/receive the data by, for example, Bluetooth technology.

The operation of the steady rest 10 is disclosed below with reference to the hydraulic scheme shown in Figure 7.

In a closing step of the first abutting element 13, of the second abutting element 14 and of the third abutting element 15 the oil flowrate that enters the first chamber 36 is greater than the oil flowrate that exits the second chamber 37.

In the closing step the driving shaft 24 drives the pump 30 with a first rotation direction.

In this manner, the pump 30 withdraws oil from the second chamber 37 by the third valve 35, appropriately piloted, and from the tank 27 by the seventh valve 41, and sends the oil to the first chamber 36 by the first valve 33.

Once the closed position has been reached, the first chamber 36 is pressurised, i.e. is substantially full of oil, whilst the second chamber 37 is discharged, i.e. substantially empty.

After the closing step, a maintaining step is provided, in which it is necessary to maintain in the closed position the first abutting element 13, the second abutting element 14 and the third abutting element 15 to enable the lathe to perform the required machinings on the workpiece to be machined. During the maintaining step the driving shaft 24 still drives the pump 30 with the aforesaid first rotation direction to compensate for possible oil leakages due, for example, to components wear, which could compromise the clamping of the workpiece.

As the second chamber 37 is being discharged, i.e. is substantially empty, and the first chamber 36 is pressurised, i.e. substantially full of oil, the pressure of the oil sent by the pump 30 increases, causing the opening of the fourth valve 38, which enables the oil to be discharged into the tank 27.

In particular, the fourth valve 38 is opened once the aforesaid first threshold value is exceeded.

In an alternative operating mode, the rotation speed of the driving shaft 24 and thus of the pump 30 is reduced during the maintaining step so as to reduce energy dissipation. This speed has however to be sufficient for compensating for possible oil leakages.

In an opening step of the first abutting element 13, of the second abutting element 14 and of the third abutting element 15 the oil flowrate that exits the first chamber 36 is greater than the oil flowrate that enters the second chamber 37.

In the opening step the driving shaft 24 drives the pump 30 with a second rotation direction, opposite the aforesaid first rotation direction.

In this manner, the pump 30 withdraws oil from the first chamber 36 by the first valve 33, suitably piloted, and sends the oil to the second chamber 37 via the third valve 35.

The excess oil, which is due to the different piston areas 59 facing the first chamber 36 and the second chamber 37, is sent by the pump 30 to the tank 27 via the second valve 34, suitably piloted.

Once the open position is reached, the first chamber 36 is discharged, i.e. substantially empty, whilst the second chamber 37 is pressurised, i.e. substantially full of oil. Subsequently, the driving shaft 24 continues to drive the pump 30 and, as the first chamber 36 is discharged, i.e. substantially empty, and the second chamber 37 is pressurised, i.e. substantially full of oil, the pressure of the oil sent by the pump 30 increases, causing the fifth valve 39 to open, which enables the oil to be discharged in the tank 27.

In particular, the fifth valve 39 opens once the aforesaid second threshold value is exceeded.

After a preset interval of time, the driving shaft 24 is stopped by the numerical control of the lathe.

It should be noted how the steady rest 10 disclosed above enables the performances and the versatility of the lathes in which it is used to be increased compared with known steady rests.

In fact, the steady rest 10, driven as disclosed above by the pump 30 and by the driving shaft 24, does not require a tool-holder turret prearranged to receive the steady rest 10, i.e. the tool-holder turret does not need to be provided with an integrated rotating distributor, but can be mounted on any motorized tool-holder turret.

This enables an owner of a lathe with a tool-holder turret that is not prearranged for receiving a steady rest, i.e. with a motorized tool-holder turret, to be able anyway to have a steady rest, this increasing the productivity and versatility of the lathe previously purchased.

Also, it should be noted how the steady rest 10 enables a user to adjust a workpiece clamping force, for example in function of the type of machining to be performed on the workpiece or of the material constituting the latter.

In order to do so, it is sufficient to suitably adjust the first threshold value of the fourth valve 38.

Further, it should be noted how the steady rest 10 enables an opening/closing speed of the first abutting element 13, of the second abutting element 14 and of the third abutting element 15 to be adjusted.

In order to do so, it is sufficient to suitably adjust a rotation speed of the driving shaft 24 by the numerical control of the lathe, this speed adjusting a flowrate of oil sent to/received from the cylinder 17.

In one embodiment of the invention that is not shown, instead of the pump 30 can be used a non-reversible pump and a spool valve suitably commanded.

Variations and/or additions to what has been disclosed above and/or shown in the attached drawings are further possible without departing from the scope of the present invention as defined by the appended claims.

## Claims

1. Steady rest (10) which is mountable on a tool-holder turret (11) of a numerical control lathe for supporting a workpiece, said tool-holder turret (11) being arranged for supporting driven or static tool holder modules (45), said steady rest (10) comprising abutting means (13, 14, 15) for abutting on an outer surface of said workpiece and piston means (36, 37, 59) which is drivable by a driving fluid for moving said abutting means (13, 14, 15) between a closed position in which said abutting means (13, 14, 15) clamps said workpiece and an open position in which said abutting means (13, 14, 15) releases said workpiece, **characterised in that** said steady rest (10) comprises driving means (24, 30) acting on said driving fluid for moving said piston means (36, 37, 59), said driving means (24, 30) being connectable to and rotatably drivable by a drive of said tool-holder turret (11).

2. Steady rest (10) according to claim 1, wherein said driving means (24, 30) comprises a hydraulic pump (30).

3. Steady rest (10) according to claim 2, wherein said hydraulic pump (30) is a reversible pump.

4. Steady rest (10) according to claim 2, or 3, wherein said driving means (24, 30) comprises a driving shaft (24) connected to, to drive, said hydraulic pump (30), said driving shaft (24) being removably connectable to said drive.

5. Steady rest (10) according to any preceding claim, and comprising tank means (27) for containing said driving fluid.

6. Steady rest (10) according to claim 5, wherein said tank means (27) comprises a buffer tank.

7. Steady rest (10) according to claim 5, or 6, and comprising conduit means (50, 51, 52, 53, 54) for conveying said driving fluid between said tank means (27) and said driving means (24, 30) and between said driving means (24, 30) and said piston means (36, 37, 59).

8. Steady rest (10) according to claim 7, wherein said driving means (24, 30) comprises a hydraulic pump (30) and wherein said conduit means (50, 51, 52, 53, 54) comprises a first conduit (50) and a second conduit (51) for respectively connecting a first chamber (36) and a second chamber (37) of said piston means (36, 37, 59) to said pump (30).

9. Steady rest (10) according to any one of claims 5 to 8, and comprising control and adjusting means (33, 34, 35, 38, 39, 40, 41) for controlling and adjusting a flow of said driving fluid between said tank means (27) and said piston means (36, 37, 59).

10. Steady rest (10) according to claim 9, wherein said driving means (24, 30) comprises a hydraulic pump (30), wherein said conduit means (50, 51, 52, 53, 54) comprises a first conduit (50) and a second conduit (51) for respectively connecting a first chamber (36) and a second chamber (37) of said piston means (36, 37, 59) to said pump (30) and wherein said control and adjusting means (33, 34, 35, 38, 39, 40, 41) comprises first valve means (38) for connecting said first conduit (50) to said tank means (27) and second valve means (39) for connecting said second conduit (51) to said tank means (27), said first valve means (38) and said second valve means (39) being arranged for opening when said driving fluid reaches respective preset threshold pressure values.

11. Steady rest (10) according to claim 9, or 10, wherein said driving means (24, 30) comprises a hydraulic pump (30), wherein said control and adjusting means (33, 34, 35, 38, 39, 40, 41) comprises third valve means (33) inserted into said first conduit (50) and comprising a one-way valve that is piloted to enable the passage of said driving fluid from said pump (30) to said first chamber (36).

12. Steady rest (10) according to any one of claims 9 to 11, wherein said driving means (24, 30) comprises a hydraulic pump (30), wherein said control and adjusting means (33, 34, 35, 38, 39, 40, 41) comprises fourth valve means (35) inserted into said second conduit (51) and comprising a one-way valve that is piloted to enable the passage of said driving fluid from said pump (30) to said second chamber (37).

13. Steady rest (10) according to any one of claims 9 to 12, wherein said control and adjusting means (33, 34, 35, 38, 39, 40, 41) comprises fifth valve means (34) comprising a one-way valve that is piloted for controlling and adjusting a flow of said driving fluid between said first conduit (50) and said tank means (27).

14. Steady rest (10) according to any one of claims 9 to 13, wherein said control and adjusting means (33, 34, 35, 38, 39, 40, 41) comprises sixth valve means (40) and seventh valve means (41) for connecting said tank means (27) respectively to said first conduit (50) and to said second conduit (51) and for enabling said driving fluid to flow from said tank means (27) respectively into said first conduit (50) and into said second conduit (51).

15. Steady rest (10) according to any one of claims 5 to 14, and comprising heat-exchanger means (31) interposed between said tank means (27) and said driving means (24, 30) for cooling said driving fluid and/or said driving means (24, 30).

16. Steady rest (10) according to claim 15, wherein said heat-exchanger means (31) comprises a gap arranged for receiving a cooling fluid, in particular a coolant fluid.

17. Steady rest (10) according to claim 16, and comprising a conduit (29) in flow communication with said gap and arranged for conveying said cooling fluid to said abutting means (13, 14, 15).

18. Steady rest (10) according to any preceding claim, and comprising attachment means which is connectable to a source of compressed air, said compressed air being arranged for exiting a body (12) of said steady rest (10) to prevent foreign bodies and/or said cooling fluid from penetrating said body (12).

19. Steady rest (10) according to any preceding claim, and comprising detecting means for detecting said closed position and/or said open position.

20. Steady rest (10) according to claim 19, wherein said detecting means is associated with wireless transmitting data means.

## Patentansprüche

1. Lünette (10), die an einem Werkzeughalterrevolver (11) einer numerisch gesteuerten Drehmaschine zum Abstützen eines Werkstücks montierbar ist, wobei der Werkzeughalterrevolver (11) zum Abstützen von angetriebenen oder statischen Werkzeughaltermodulen (45) angeordnet ist, wobei die Lünette (10) eine Anlageeinrichtung (13, 14, 15) zum Anliegen an einer äußeren Oberfläche des Werkstücks und eine Kolbeneinrichtung (36, 37, 59) umfasst, die durch ein Antriebsfluid zum Bewegen der Anlageeinrichtung (13, 14, 15) zwischen einer geschlossenen Position, in der die Anlageeinrichtung (13, 14, 15) das Werkstück klemmt, und einer offenen Position, in der die Anlageeinrichtung (13, 14, 15) das Werkstück loslässt, antreibbar ist, **dadurch gekennzeichnet, dass** die Lünette (10) eine Antriebseinrichtung (24, 30) umfasst, die auf das Antriebsfluid wirkt, um die Kolbeneinrichtung (36, 37, 59) zu bewegen, wobei die Antriebseinrichtung (24, 30) mit einem Antrieb des Werkzeughalterrevolvers (11) verbindbar und durch diesen rotatorisch antreibbar ist.

2. Lünette (10) nach Anspruch 1, wobei die Antriebseinrichtung (24, 30) eine hydraulische Pumpe (30) umfasst.

3. Lünette (10) nach Anspruch 2, wobei die hydraulische Pumpe (30) eine umkehrbare Pumpe ist.

4. Lünette (10) nach Anspruch 2 oder 3, wobei die Antriebseinrichtung (24, 30) eine Antriebswelle (24) umfasst, die mit der hydraulischen Pumpe (30) für deren Antrieb verbunden ist, wobei die Antriebswelle (24) mit dem Antrieb entfernbar verbunden werden kann.

5. Lünette (10) nach einem vorangehenden Anspruch und mit einer Tankeinrichtung (27) zum Aufnehmen des Antriebsfluids.

6. Lünette (10) nach Anspruch 5, wobei die Tankeinrichtung (27) einen Puffertank umfasst.

7. Lünette (10) nach Anspruch 5 oder 6 und mit einer Leitungseinrichtung (50, 51, 52, 53, 54) zum Befördern des Antriebsfluids zwischen der Tankeinrichtung (27) und der Antriebseinrichtung (24, 30) und zwischen der Antriebseinrichtung (24, 30) und der Kolbeneinrichtung (36, 37, 59).

8. Lünette (10) nach Anspruch 7, wobei die Antriebseinrichtung (24, 30) eine hydraulische Pumpe (30) umfasst und wobei die Leitungseinrichtung (50, 51, 52, 53, 54) eine erste Leitung (50) und eine zweite Leitung (51) zum jeweiligen Verbinden einer ersten Kammer (36) und einer zweiten Kammer (37) der Kolbeneinrichtung (36, 37, 59) mit der Pumpe (30) umfasst.

9. Lünette (10) nach einem der Ansprüche 5 bis 8 und mit einer Steuer- und Einstelleinrichtung (33, 34, 35, 38, 39, 40, 41) zum Steuern und Einstellen einer Strömung des Antriebsfluids zwischen der Tankeinrichtung (27) und der Kolbeneinrichtung (36, 37, 59).

10. Lünette (10) nach Anspruch 9, wobei die Antriebseinrichtung (24, 30) eine hydraulische Pumpe (30) umfasst, wobei die Leitungseinrichtung (50, 51, 52, 53, 54) eine erste Leitung (50) und eine zweite Leitung (51) zum jeweiligen Verbinden einer ersten Kammer (36) und einer zweiten Kammer (37) der Kolbeneinrichtung (36, 37, 59) mit der Pumpe (30) umfasst, und wobei die Steuer- und Einstelleinrichtung (33, 34, 35, 38, 39, 40, 41) eine erste Ventileinrichtung (38) zum Verbinden der ersten Leitung (50) mit der Tankeinrichtung (27) und eine zweite Ventileinrichtung (39) zum Verbinden der zweiten Leitung (51) mit der Tankeinrichtung (27) umfasst, wobei die erste Ventileinrichtung (38) und die zweite Ventileinrichtung (39) zum Öffnen, wenn das Antriebsfluid jeweilige vorgegebene Schwellendruckwerte erreicht, angeordnet sind.

11. Lünette (10) nach Anspruch 9 oder 10, wobei die Antriebseinrichtung (24, 30) eine hydraulische Pumpe (30) umfasst, wobei die Steuer- und Einstelleinrichtung (33, 34, 35, 38, 39, 40, 41) eine dritte Ventileinrichtung (33) umfasst, die in die erste Leitung (50) eingesetzt ist und ein Einwegventil umfasst, das so gesteuert wird, dass es den Durchgang des Antriebsfluids von der Pumpe (30) zur ersten Kammer (36) ermöglicht.

12. Lünette (10) nach einem der Ansprüche 9 bis 11, wobei die Antriebseinrichtung (24, 30) eine hydraulische Pumpe (30) umfasst, wobei die Steuer- und Einstelleinrichtung (33, 34, 35, 38, 39, 40, 41) eine vierte Ventileinrichtung (35) umfasst, die in die zweite Leitung (51) eingesetzt ist und ein Einwegventil umfasst, das so gesteuert wird, dass es den Durchgang des Antriebsfluids von der Pumpe (30) zur zweiten Kammer (37) ermöglicht.

13. Lünette (10) nach einem der Ansprüche 9 bis 12, wobei die Steuer- und Einstelleinrichtung (33, 34, 35, 38, 39, 40, 41) eine fünfte Ventileinrichtung (34) mit einem Einwegventil umfasst, das zum Steuern und Einstellen einer Strömung des Antriebsfluids zwischen der ersten Leitung (50) und der Tankeinrichtung (27) gesteuert wird.

14. Lünette (10) nach einem der Ansprüche 9 bis 13, wobei die Steuer- und Einstelleinrichtung (33, 34, 35, 38, 39, 40, 41) eine sechste Ventileinrichtung (40) und eine siebte Ventileinrichtung (41) zum Verbinden der Tankeinrichtung (27) mit der ersten Leitung (50) bzw. mit der zweiten Leitung (51) und zum Ermöglichen, dass das Antriebsfluid von der Tankeinrichtung (27) in die erste Leitung (50) bzw. in die zweite Leitung (51) strömt, umfasst.

15. Lünette (10) nach einem der Ansprüche 5 bis 14 und mit einer Wärmetauschereinrichtung (31), die zwischen die Tankeinrichtung (27) und die Antriebseinrichtung (24, 30) eingefügt ist, zum Kühlen des Antriebsfluids und/oder der Antriebseinrichtung (24, 30).

16. Lünette (10) nach Anspruch 15, wobei die Wärmetauschereinrichtung (31) einen Spalt umfasst, der zum Aufnehmen eines Kühlfluids, insbesondere eines Kühlmittelfluids, angeordnet ist.

17. Lünette (10) nach Anspruch 16 und mit einer Leitung (29) in Strömungsverbindung mit dem Spalt, die zum Befördern des Kühlfluids zu der Anlageeinrichtung (13, 14, 15) angeordnet ist.

18. Lünette (10) nach einem vorangehenden Anspruch und mit einer Befestigungseinrichtung, die mit einer Druckluftquelle verbindbar ist, wobei die Druckluft zum Austritt aus einem Körper (12) der Lünette (10) angeordnet ist, um zu verhindern, dass Fremdkörper und/oder das Kühlfluid in den Körper (12) eindringen.

19. Lünette (10) nach einem vorangehenden Anspruch und mit einer Erfassungseinrichtung zum Erfassen der geschlossenen Position und/oder der offenen Position.

20. Lünette (10) nach Anspruch 19, wobei die Erfassungseinrichtung einer Einrichtung zur drahtlosen Übertragung von Daten zugeordnet ist.

## Revendications

1. Lunette (10) qui peut être montée sur une tourelle porte-outils (11) d'un tour à commande numérique afin de supporter une pièce à usiner, ladite tourelle porte-outils (11) étant agencée pour supporter des modules (45) porte-outils entraînés ou statiques, ladite lunette (10) comprenant des moyens d'aboutement (13, 14, 15) pour s'abouter sur une surface externe de ladite pièce à usiner et des moyens de piston (36, 37, 59) qui peuvent être entraînés par un fluide moteur pour déplacer lesdits moyens d'aboutement (13, 14, 15) entre une position fermée dans laquelle lesdits moyens d'aboutement (13, 14, 15) bloquent ladite pièce à usiner et une position ouverte dans laquelle lesdits moyens d'aboutement (13, 14, 15) libèrent ladite pièce à usiner, ***caractérisée en ce que*** ladite lunette (10) comprend des moyens d'entraînement (24, 30) agissant sur ledit fluide moteur pour déplacer lesdits moyens de piston (36, 37, 59), lesdits moyens d'entraînement (24, 30) pouvant être raccordés et entraînés de manière rotative par un entraînement de ladite tourelle (11) porte-outils.

2. Lunette (10) selon la revendication 1, dans laquelle lesdits moyens d'entraînement (24, 30) comprennent une pompe hydraulique (30).

3. Lunette (10) selon la revendication 2, dans laquelle ladite pompe hydraulique (30) est une pompe réversible.

4. Lunette (10) selon la revendication 2 ou 3, dans laquelle lesdits moyens d'entraînement (24, 30) comprennent un arbre d'entraînement (24) raccordé, pour l'entraîner, à ladite pompe hydraulique (30), ledit arbre d'entraînement (24) étant raccordable de manière amovible audit entraînement.

5. Lunette (10) selon l'une quelconque des revendications précédentes, et comprenant des moyens de réservoir (27) destinés à contenir ledit fluide moteur.

6. Lunette (10) selon la revendication 5, dans laquelle lesdits moyens de réservoir (27) comprennent un réservoir tampon.

7. Lunette (10) selon la revendication 5 ou 6, et comprenant des moyens de canalisation (50, 51, 52, 53, 54) destinés à acheminer ledit fluide moteur entre lesdits moyens de réservoir (27) et lesdits moyens d'entraînement (24, 30), et entre lesdits moyens d'entraînement (24, 30) et lesdits moyens de piston (36, 37, 59).

8. Lunette (10) selon la revendication 7, dans laquelle lesdits moyens d'entraînement (24, 30) comprennent une pompe hydraulique (30) et dans laquelle lesdits moyens de canalisation (50, 51, 52, 53, 54) comprennent une première canalisation (50) et une deuxième canalisation (51) pour raccorder à ladite pompe (30) respectivement une première chambre (36) et une deuxième chambre (37) desdits moyens de piston (36, 37, 59).

9. Lunette (10) selon l'une quelconque des revendication 5 à 8, et comprenant des moyens (33, 34, 35, 38, 39, 40, 41) de commande et de réglage pour commander et réguler un écoulement dudit fluide moteur entre lesdits moyens de réservoir (27) et lesdits moyens de piston (36, 37, 59).

10. Lunette (10) selon la revendication 9, dans laquelle lesdits moyens d'entraînement (24, 30) comprennent une pompe hydraulique (30), dans laquelle lesdits moyens de canalisation (50, 51, 52, 53, 54) comprennent une première canalisation (50) et une deuxième canalisation (51) pour raccorder à ladite pompe (30) respectivement une première chambre (36) et une deuxième chambre (37) desdits moyens de piston (36, 37, 59), et dans laquelle lesdits moyens (33, 34, 35, 38, 39, 40, 41) de commande et de réglage comprennent des premiers moyens de vanne (38) pour raccorder ladite première canalisation (50) auxdits moyens de réservoir (27) et des deuxièmes moyens de vanne (39) pour raccorder ladite deuxième canalisation (51) auxdits moyens de réservoir (27), lesdits premiers moyens de vanne (38) et lesdits deuxièmes moyens de vanne (39) étant prévus pour s'ouvrir lorsque ledit fluide moteur atteint des valeurs de seuil de pression prédéfinies respectives.

11. Lunette (10) selon la revendication 9 ou 10, dans laquelle lesdits moyens d'entraînement (24, 30) comprennent une pompe hydraulique (30), dans laquelle lesdits moyens de commande et de réglage (33, 34, 35, 38, 39, 40, 41) comprennent des troisièmes moyens de vanne (33) insérés dans ladite première canalisation (50) et comprenant une vanne unidirectionnelle qui est pilotée pour permettre le passage dudit fluide moteur de ladite pompe (30) à ladite première chambre (36).

12. Lunette (10) selon l'une quelconque des revendications 9 à 11, dans laquelle lesdits moyens d'entraînement (24, 30) comprennent une pompe hydraulique (30), dans laquelle lesdits moyens de commande et de réglage (33, 34, 35, 38, 39, 40, 41) comprennent des quatrièmes moyens de vanne (35) insérés dans ladite deuxième canalisation (51) et comprenant une vanne unidirectionnelle qui est pilotée pour permettre le passage dudit fluide moteur de ladite pompe (30) à ladite deuxième chambre (37).

13. Lunette (10) selon l'une quelconque des revendications 9 à 12, dans laquelle lesdits moyens de commande et de réglage (33, 34, 35, 38, 39, 40, 41) comprennent des cinquièmes moyens de vanne (34) comprenant une vanne unidirectionnelle qui est pilotée pour commander et réguler un écoulement dudit fluide moteur entre ladite première canalisation (50) et lesdits moyens de réservoir (27).

14. Lunette (10) selon l'une quelconque des revendications 9 à 13, dans laquelle lesdits moyens de commande et de réglage (33, 34, 35, 38, 39, 40, 41) comprennent des sixièmes moyens de vanne (40) et des septièmes moyens de vanne (41) pour raccorder lesdits moyens de réservoir (27) respectivement à ladite première canalisation (50) et à ladite deuxième canalisation (51) et pour permettre audit fluide moteur de s'écouler depuis lesdits moyens de réservoir (27), à l'intérieur de ladite première canalisation (50) et de ladite deuxième canalisation (51), respectivement.

15. Lunette (10) selon l'une quelconque des revendications 5 à 14, et comprenant des moyens (31) d'échangeur de chaleur interposés entre lesdits moyens de réservoir (27) et lesdits moyens d'entraînement (24, 30), destinés à refroidir ledit fluide moteur et/ou lesdits moyens d'entraînement (24, 30).

16. Lunette (10) selon la revendication 15, dans laquelle lesdits moyens (31) d'échangeur de chaleur comprennent un interstice prévu pour recevoir un fluide de refroidissement, en particulier un fluide réfrigérant.

17. Lunette (10) selon la revendication 16, et comprenant une canalisation (29) en communication d'écoulement avec ledit interstice et prévue pour acheminer ledit fluide de refroidissement jusqu'auxdits moyens d'aboutement (13, 14, 15).

18. Lunette (10) selon l'une quelconque des revendications précédentes, et comprenant des moyens de fixation qui peuvent être raccordés à une source d'air comprimé, ledit air comprimé étant prévu pour faire sortir un corps (12) de ladite lunette (10) afin d'empêcher des corps étrangers et/ou du fluide de refroidissement de pénétrer dans ledit corps (12).

19. Lunette (10) selon l'une quelconque des revendications précédentes, et comprenant des moyens de détection destinés à détecter ladite position fermée et/ou ladite position ouverte.

20. Lunette (10) selon la revendication 19, dans laquelle lesdits moyens de détection sont associés à des moyens de transmission de données sans fil.
